# FASCICULE DE BREVET EUROPEEN

(11) **EP 3 180 372 B1**
(45) Date de publication et mention de la délivrance du brevet: **26.12.2018**
(21) Numéro de dépôt: 15759901.0
(22) Date de dépôt: 13.08.2015
(51) Int. Cl.: C08F 251/00, D21H 19/54, D21H 21/16

(54) **COPOLYMÈRE DE DEXTRINE AVEC DU STYRÈNE ET UN ESTER ACRYLIQUE, SON PROCÉDÉ DE FABRICATION ET SON UTILISATION POUR LE COUCHAGE PAPETIER**
DEXTRINCOPOLYMER MIT STYROL UND EINEM ACRYLSÄUREESTER, HERSTELLUNGSVERFAHREN DAFÜR UND VERWENDUNG DAVON ZUR PAPIERBESCHICHTUNG
DEXTRIN COPOLYMER WITH STYRENE AND AN ACRYLIC ESTER, MANUFACTURING METHOD THEREOF, AND USE THEREOF FOR PAPER COATING

(30) Priorité: 14.08.2014 FR 1457813
(43) Date de publication de la demande: 21.06.2017
(73) Titulaire: Roquette Frères, 62136 Lestrem (FR)
(72) Inventeur: PARCQ, Julien, F-59000 Lille (FR); WIATZ, Vincent, F-59160 Lomme (FR)
(74) Mandataire: Cabinet Plasseraud
(86) Numéro de dépôt international: PCT/FR2015/052206
(87) Numéro de publication internationale: WO 2016/024070

(56) Documents cités:
- WO-A1-2013/072639
- US-A- 5 004 767
- US-A1- 2009 139 675

## Description

Une feuille de papier ou de carton est un support fabriqué à partir de fibres de cellulose. Ces fibres sont principalement extraites du bois ou de papiers et cartons récupérés et destinés à être recyclés. La fabrication d'une telle feuille passe par plusieurs étapes. Dans un premier temps, on fabrique la pâte à papier par séparation des fibres de cellulose. Dans un deuxième temps, la pâte est diluée dans l'eau avant d'arriver en caisse de tête de la machine à papier, qui répartit régulièrement les fibres et donne sa géométrie à l'écoulement de la pâte en suspension. Il faut ensuite éliminer l'eau de manière à structurer la feuille de papier. Pour ce faire, cette dernière subit des opérations successives d'égouttage, de mise sous presse, de passage entre des rouleaux, et enfin de séchage.

Dans l'industrie du papier et du carton, il existe de nombreuses qualités de produits. Les papiers et cartons de haute qualité, par exemple ceux utilisés pour les magazines ou les plaquettes de communication, sont des produits regroupés sous le terme de « papiers couchés ». Le « couchage » correspond à une opération ultérieure où la surface du papier égoutté et séché est recouverte d'une ou plusieurs « couches », généralement à base de pigments en mélange avec des liants et des produits d'addition divers.

Ces couches sont appliquées par un procédé réalisé à l'aide de compositions aqueuses appelées « sauces de couchage ». Le but de cette opération est de rendre la surface du papier, qui est rugueuse et macroporeuse en l'absence de traitement, unie et microporeuse, ceci afin de permettre une meilleure reproduction des impressions. De plus, on peut par cette opération réaliser une amélioration de la blancheur, du brillant, ou encore du toucher du papier imprimé.

Comme son nom l'indique, le liant de la sauce de couchage a pour fonction première d'assurer la cohésion des différents ingrédients au sein de la sauce. Historiquement, on a mis en oeuvre des produits d'origine synthétique, comme des latex acryliques ou de type styrène-butadiène. Plus récemment, on a cherché à remplacer ces produits issus de la pétrochimie par des solutions d'origine végétale, moins coûteuses et plus respectueuses de l'environnement et de nos ressources naturelles. A la lueur des taux de liant mis en oeuvre dans les sauces de couchage (pouvant atteindre 25 % du poids total de la matière sèche), on comprend que cette problématique de remplacement des latex synthétiques soit devenue un enjeu majeur pour l'industrie papetière.

Les dextrines constituent une de ces solutions issues de la chimie du végétal. On désigne communément sous ce terme un amidon modifié en phase sèche, par action de la chaleur, emploi d'un réactif chimique, par action de rayonnements ionisants, ou les combinaisons de ces différents moyens. Ces produits sont bien connus et largement décrits dans la littérature. La gamme STABILYS® commercialisée par la Demanderesse est un exemple de tels produits commerciaux. Ces dextrines présentent typiquement une masse moléculaire moyenne comprise entre 60 000 et 2 500 000 Daltons (Da).

L'utilisation de dextrines dans des sauces de couchage est déjà bien documentée dans l'état de la technique. La demande de brevet EP 1 281 721 fait état de dextrines issues d'un traitement thermique de l'amidon, et mentionne leur utilisation dans le domaine du papier, plus particulièrement comme agent d'encollage et de couchage. La Demande de Brevet WO 2005 / 047385 décrit des compositions à base de deux amidons modifiés de manière chimique, physique ou enzymatique, et leur utilisation dans le couchage du papier. La Demanderesse a elle-même décrit, dans la Demande de Brevet WO 2005 / 003456, des compositions à base d'amidon modifié utilisées pour le collage et le couchage du papier et du carton. La rhéologie des sauces et la rétention d'eau sont améliorées par la mise en oeuvre de telles compositions.

Néanmoins, les dextrines présentent un caractère de solubilité totale ou tout au moins partielle dans l'eau, ce qui peut présenter des inconvénients eu égard à leur utilisation dans des sauces de couchage. En effet, après application et séchage de ladite sauce sur le papier ou le carton, il est important de disposer d'une surface résistant à la pénétration des espèces hydrophiles comme l'eau et les encres aqueuses. On va donc chercher à augmenter son degré d'hydrophobicité. Or, les solutions entièrement naturelles à base exclusivement d'amidons modifiés ne peuvent convenir à cet égard : il convient de leur adjoindre une composante hydrophobe, la plupart du temps sous la forme d'un monomère greffé et de nature non hydrophile.

A cet égard, les documents US 3,061,471 et US 3,061, 472 décrivent un procédé de polymérisation d'ester d'acide acrylique en présence d'amidon ou de dextrine, le ratio en poids amidon ou dextrine : acide acrylique étant compris entre 6 : 4 ou 7 : 3 et 1 : 19. Le produit résultant est utilisé pour l'encollage de fibres hydrophobes, la quantité d'amidon ou de dextrine utilisée permettant de maintenir la viscosité du produit dans un intervalle acceptable.

Le document US 5,004,767 décrit un procédé de polymérisation de monomères acryliques, dans lequel une dextrine est utilisée comme colloïde protecteur en vue d'éviter la coagulation ou la précipitation des particules de polymère formées. Cette dextrine présente très peu de hautes masses moléculaires (moins de 6 % en poids présentant une masse moléculaire en poids supérieure à 25 000 Da), et est utilisée à hauteur de 60 % en poids au maximum par rapport au poids sec total de dextrine et de monomères acryliques. Le produit final peut être utilisé comme adhésif dans l'industrie papetière.

Le document US 5,147,907 décrit un procédé de polymérisation de monomères éthyléniques insaturés, en présence d'une dextrine permettant de stabiliser la dispersion obtenue. Cette dextrine est utilisée à concurrence de 200 parts en poids pour 100 parts de monomères initiaux, et présente au plus 5 % en poids d'une fraction ayant une masse moléculaire en poids supérieure à 60 000 Da. Le polymère résultant peut être utilisé comme agent d'encollage dans la fabrication du papier.

Le document US 5,578,678 décrit des polymères greffés, par réaction entre un monomère contenant des unités mono- oligo ou polysaccharides, avec un monomère monoéthylénique insaturé, le mélange théorique en poids entre ces deux constituants allant de 80:20 à 5:95. Le document US 5,227,446 décrit de manière similaire des polymères greffés, par réaction entre un monomère contenant des unités mono, oligo, ou polysaccharides ayant subi une modification chimique, avec un monomère monoéthylénique insaturé, le mélange théorique en poids entre ces deux constituants allant de 80:5 à 20:95. Il est à noter que ces 2 documents n'exemplifient pas des % en poids de dextrine supérieurs à 60 %, par rapport au poids total de dextrine et de monomères hydrophobes.

A la suite de quoi, il n'existe pas à ce jour de solution technique basée sur des dextrines polymérisées avec des monomères hydrophobes, susceptibles de présenter les avantages suivants, à savoir un très bon compromis entre :
- une teneur élevée en dextrine (> 60 % en poids par rapport au poids de dextrine et de monomères hydrophobes) afin de privilégier l'aspect bio-sourcé du produit ;
- un très bon pouvoir hydrophobe à l'égard de la feuille de papier.

Poursuivant ses recherches dans ce sens, la Demanderesse est parvenue à mettre au point un tel produit. Celui-ci est notamment basé sur le choix judicieux de 2 monomères hydrophobes, et sur un ajustement précis de leurs proportions relatives qui conduisent à des effets de synergie inattendus au niveau de l'hydrophobisation du papier couché.

En l'occurrence, cette solution repose précisément sur un copolymère d'une dextrine et d'au moins deux monomères hydrophobes :
- ladite dextrine représentant au moins 60 % en poids du poids total de dextrine et de monomères hydrophobes et ayant une masse moléculaire moyenne en poids allant de 60 000 Da à 2 000 000 Da,
- les monomères hydrophobes étant constitués par le styrène et par au moins un ester acrylique linéaire ou ramifié de C1 à C4, le ratio en poids styrène : ester étant compris entre 10:90 et 90:10.

Par ailleurs, la Demanderesse a également mis au point un procédé de fabrication d'un tel copolymère, tout en montrant que c'était l'optimisation de la nature et de la quantité du système initiateur de polymérisation qui permettait d'obtenir à la fois un taux de conversion élevé en monomères hydrophobes ainsi qu'un très bon pouvoir hydrophobe à l'égard de la feuille de papier.

Aussi, un premier objet de la présente invention consiste en un procédé de polymérisation radicalaire entre une dextrine et au moins deux monomères hydrophobes,
- ladite dextrine représentant au moins 60 % en poids du poids total de dextrine et de monomères hydrophobes et ayant une masse moléculaire moyenne en poids allant de 60 000 Da à 2 000 000 Da,
- les monomères hydrophobes étant constitués par le styrène et par au moins un ester acrylique linéaire ou ramifié de C1 à C4, le ratio en poids styrène : ester étant compris entre 10:90 et 90:10,
ce procédé étant caractérisé en ce que la polymérisation a lieu en présence d'un initiateur de radicaux libres qui est un persulfate, dans un dosage compris entre 0,5 % et 2,5 % en poids sec par rapport au poids sec de dextrine.

Un des intérêts de la présente invention réside dans le choix des conditions expérimentales et notamment dans la sélection de la nature de l'initiateur et de la dose mise en oeuvre pour obtenir l'effet désiré. Le choix de l'initiateur et la dose introduite au cours de la réaction vont potentiellement impacter la distribution de la masse moléculaire et la viscosité du milieu, au travers de phénomènes de clivage de liaisons glycosidiques soumis à l'influence de la température et des radicaux générés dans le milieu. Il a notamment été observé par la Demanderesse que la sélection de l'initiateur de la réaction de polymérisation radicalaire et son dosage étaient des paramètres critiques vis-à-vis des propriétés des produits obtenus.

Dans le cas présent, il est indispensable d'utiliser un persulfate, préférentiellement de sodium ou de potassium et ce, dans un dosage compris entre 0,5 % et 2,5 % en poids sec par rapport au poids sec de dextrine.

Le procédé selon la présente invention est aussi caractérisé en ce que la dextrine représente au moins 60 %, préférentiellement au moins 70 %, et de manière encore plus préférée au moins 80 % en poids du poids total de dextrine, de styrène et d'ester.

Selon une première variante, la dextrine présente une masse moléculaire moyenne en poids allant de 500 000 Da à 1 500 000 Da, et de manière plus préférée présente une fraction massique supérieure à 5 % de molécules de masse moléculaire moyenne en poids supérieure à 1 000 000 Da, de préférence une fraction comprise entre 5 et 25 %.

Selon une deuxième variante, la dextrine présente une masse moléculaire moyenne en poids allant de 60 000 Da à 500 000Da.

De manière préférée, le ratio en poids styrène : ester est compris entre 10:90 et 90:10, plus préférentiellement entre 80:20 et 20:80.

De manière également préférée, l'ester est un (méth)acrylate de butyle, préférentiellement l'acrylate de butyle.

Préalablement à la réaction de polymérisation, il convient de fournir une dextrine apte à être mise en oeuvre pendant ladite polymérisation. Ceci est réalisé à partir d'un amidon dont on va déstructurer les granules par un apport d'énergie thermique, mécanique, chimique (agent alcalin, oxydant...) ou en combinant ces énergies (apport d'énergie chimique et thermique ou d'énergie mécanique et thermique...) et ce, en présence d'eau de sorte que les chaines d'amidon sont complétement dispersées dans le milieu réactionnel.

Cette étape peut être réalisée selon divers procédés bien connus de l'homme de métier. Citons à titre d'exemple la cuisson en réacteur fermé, à pression atmosphérique (réacteur fermé classique) ou sous pression (autoclave), la cuisson à l'aide d'un jet-cooker, la cuisson en batch par ajout de vapeur, ou l'emploi d'une extrudeuse (apport d'énergie mécanique et thermique). Dans tous les cas il s'agit de maintenir le lait de dérivé amylacé à une température supérieure à la température de gélatinisation de ce dernier (en général une température supérieure à 85°C) en plus d'un éventuel apport d'énergie mécanique ou traitement chimique. L'amidon va ainsi perdre sa structure cristalline (le granule va se déstructurer libérant ainsi son contenu) et se disperser dans le milieu de la réaction. Cette étape s'accompagne souvent d'une augmentation de viscosité dépendant de la nature du dérivé amylacé considéré.

Les dérivés amylacés d'intérêt sont les amidons natifs ou modifiés chimiquement (amidons stabilisés, réticulés, traités thermiquement de type dextrine, amidons oxydés, ou fluidifiés enzymatiquement ou par traitement acide, amidons cationiques ou anioniques...). Il est également possible de réaliser une conversion enzymatique, un traitement oxydant ou acide préalablement à la réaction de polymérisation radicalaire de sorte d'ajuster certaines grandeurs comme la viscosité du milieu.
On obtient alors une « colle » constituée de ladite dextrine ayant subi les traitements précités, cette dextrine étant en suspension dans l'eau, à un extrait sec d'au moins 10 % en poids et d'au plus 60% en poids, cet extrait sec étant plus préférentiellement compris entre 15% et 50% en poids. La « colle » est la suspension aqueuse contenant ladite dextrine.

On réalise alors la réaction de polymérisation radicalaire proprement dite. Cette réaction a lieu soit dans le réacteur ayant servi à fabriquer la suspension aqueuse de dextrine, soit dans un réacteur distinct. On préfèrera la première solution.

Dans les deux cas, la réaction de polymérisation a lieu par introduction des monomères (styrène est ester(s) acrylique(s)) et ajout de l'initiateur de radicaux libres.

Les réactifs (monomères, initiateurs) peuvent être introduits sous forme pure (solide ou liquide), être introduits sous forme de solutions aqueuses ou dispersion après émulsification préalable. L'introduction de ces réactifs dans le milieu réactionnel peut être effectuée dans un mode batch classique (introduction de tous les réactifs dans le réacteur en totalité ou par fraction) ou en alimentation continue.

On peut choisir de mélanger au préalable certains additifs comme par exemple les monomères hydrophobes.

Afin de contrôler la croissance des chaines de polymère en formation à la surface de l'amidon, il est possible d'ajouter des agents de transfert de chaînes dans le milieu. Ces réactifs peuvent là encore être introduits en totalité ou par fraction dans le réacteur initialement ou en cours de réaction, ou être additionné en continu au cours de la polymérisation radicalaire. Citons à titre d'exemples mais de façon non exhaustive, les thiols (ex : n-butylthiols, le mercaptoethanol), les halogénures de méthanes (ex : chloroforme), les composés présentant des ponts disulfure, ou des composés organiques comme les terpènes (cycliques ou acycliques)..

Il est également possible d'introduire tout d'abord les monomères hydrophobes dans le réacteur, puis d'ajouter par la suite la dextrine et l'initiateur de radicaux libres.

Dans un mode préférentiel, le réacteur contenant la dextrine est alimenté en continu par une solution d'initiateur et de monomères introduits séparément mais simultanément en continu pendant un temps pouvant aller de 15 minutes à 10 heures, préférentiellement de 30 minutes à 5 heures.

Dans un mode préférentiel, la suspension de dextrine est réalisée par mélange sous agitation de ladite dextrine dans l'eau à température ambiante. Cette suspension est alors chauffée à une température supérieure à 80°C et préférentiellement à une température de 95°C environ pendant 30 minutes, de façon à déstructurer la base amylacée employée et de rendre accessible un maximum de ses fonctions réactives.

La suspension sous agitation est alors placée à la température de la réaction qui est ici de 85°C. La solution aqueuse d'initiateur et le mélange de monomères sont introduits pendant 1 heure en continu, séparément mais simultanément. Le milieu réactionnel est maintenu sous agitation à la température de la réaction, soit 85°C, pendant 30 minutes supplémentaires.

Le produit obtenu pourra se présenter sous forme de gel ou d'une pâte visqueuse ou fluide, de texture courte ou plus longue. La couleur du produit ainsi obtenu variera du blanc au marron, en fonction de la quantité et de la nature des réactifs mis en jeu pour la polymérisation.

Le produit obtenu pourra également voir son pH ajusté par ajout d'agent alcalin ou acide en fin de réaction afin d'atteindre des valeurs compatibles avec son emploi dans les applications visées. La régulation du pH pourra toutefois être réalisée au cours de la réaction par ajout des quantités suffisantes d'un agent alcalin tel de la soude ou d'un acide.

Un deuxième objet de la présente invention consiste en un copolymère d'une dextrine et d'au moins deux monomères hydrophobes :
- ladite dextrine représentant au moins 60 % en poids du poids total de dextrine et de monomères hydrophobes et ayant une masse moléculaire moyenne en poids allant de 60 000 Da à 2 000 000 Da,
- les monomères hydrophobes étant constitués par le styrène et au moins un ester acrylique linéaire ou ramifié de C1 à C4, le ratio en poids styrène : ester étant compris entre 10:90 et 90:10.

Ce copolymère est aussi caractérisé en ce que la dextrine représente au moins 60 %, plus préférentiellement au moins 70 %, et de manière la plus préférée au moins 80 % en poids du poids total de dextrine, de styrène et d'ester.

Selon une première variante, la dextrine présente une masse moléculaire moyenne en poids allant de 500 000 Da à 1 500 000 Da, et de manière préférée présente une fraction massique supérieure à 5% de molécules de masse moléculaire supérieure à 1 000 000 Da, de préférence une fraction massique comprise entre 5 et 25%.

Selon une deuxième variante, la dextrine présente une masse moléculaire moyenne en poids allant de 60 000 Da à 500 000 Da.

De manière préférée, le ratio en poids styrène : ester est compris entre 10:90 et 90:10, préférentiellement entre 80:20 et 20:80.

De manière également préférée, l'ester est un (méth)acrylate de butyle, préférentiellement l'acrylate de butyle.

Un autre objet de la présente invention consiste en une suspension aqueuse contenant le copolymère précité. Cette suspension est notamment caractérisée en ce qu'elle présente une teneur en matière sèche, ou teneur en poids sec dudit copolymère, supérieure à 10 % de son poids total, et notamment comprise entre 10 % et 50 % de son poids total.

Un autre objet de la présente invention consiste en une sauce de couchage contenant la suspension ou le copolymère précité.

Un dernier objet de la présente invention consiste en un papier couché sur au moins une de ses faces avec la sauce de couchage précitée.

### EXEMPLES

### Exemple 1

Cet exemple illustre l'influence de la nature du système initiateur utilisé pendant la réaction de polymérisation sur le taux de conversion en monomères hydrophobes introduits.

On définit le taux de conversion des monomères introduits dans la réaction de polymérisation, comme étant égal au taux en poids de monomères effectivement greffés sur la dextrine par rapport au poids total de monomères engagés. Ce taux est appréhendé de manière indirecte, en déterminant pour le produit résultant de la réaction de polymérisation le pourcentage de prise en poids après précipitation dans un solvant.

On commence par réaliser une suspension de dextrine en dispersant, dans l'eau et sous une agitation suffisante pour permettre le maintien en suspension de ladite dextrine dans le milieu, 362 g en l'état de dérivé amylacé (soit 323 g sec) qui est le STABILYS® A025 commercialisé par la société Demanderesse. La suspension est réalisée de manière à obtenir un extrait sec égal à 20 % de son poids total.

Cette suspension est introduite dans un réacteur double enveloppe en verre de 2 litres, équipé d'une vanne de fond non thermostatée permettant le soutirage du produit en fin de réaction et d'un couvercle muni de plusieurs orifices d'entrée rendant possible une introduction séparée de réactifs dans le milieu via des pompes. Le réacteur est également équipé de piquages permettant l'introduction de sondes (pH, température...) pour le suivi de certains paramètres de réaction. Le mobile d'agitation (recouvert de téflon) est choisi afin d'assurer une homogénéisation suffisante (présence d'un vortex) en cas de montée en viscosité.

On augmente ensuite la température dans le réacteur à 95°C et on maintient cette température pendant 30 minutes. Le milieu réactionnel est ensuite amené à 85°C.

On introduit ensuite les monomères et l'initiateur. On fait varier le système initiateur de radicaux libres, tout en maintenant constant le ratio molaire entre la dextrine et l'initiateur.
Dans le cas du couple H₂O₂/Fe(II), le fer est introduit sous forme de sulfate de fer dissous dans l'eau potable (solution à 1 % en masse) préalablement à l'introduction des monomères et de l'H₂O₂. Dans le cas du couple (NH₄)₂Ce(NO₃)₆/HNO₃, l'acide nitrique est introduit dans le milieu préalablement à l'introduction des monomères et de la solution d'ammonium cérium nitrate. Dans le cas du persulfate de sodium, celui-ci est introduit sous forme d'une solution aqueuse à 1,5 % en poids.
Dans le cas des couples d'initiateurs H₂O₂/Fe(II) et (NH₄)₂Ce(NO₃)₆/HNO₃, les espèces générant les radicaux libres sont le peroxyde d'hydrogène et le cérium. Ce sont donc ces réactifs qui sont introduits en continu pendant 1 heure tandis que le Fe(II) et l'acide nitrique sont introduits initialement dans le milieu de sorte d'activer la formation des espèces radicalaires.

En ce qui concerne les monomères, ils sont pesés séparément, puis introduits dans un flacon en verre bouché. Le flacon est alors agité manuellement de façon à homogénéiser le mélange (mélange 75 % de styrène et 25 % d'acrylate de n-butyle en masse). Les monomères sont alors introduits de manière continue pendant 1 h dans le milieu à l'aide d'une pompe péristaltique. Dans le même temps, l'initiateur (solution d'H₂O₂ à 1 % en masse, ou solution d'ammonium cérium nitrate à 7.9 % en masse, ou solution de persulfate à 4 % en masse) est également introduit en continu et séparément des monomères pendant 1 h dans le milieu au moyen d'une pompe péristaltique.

Après la fin d'introduction des réactifs, le milieu est laissé à 85°C pendant 30 minutes sous une agitation suffisante pour observer un vortex indiquant une bonne homogénéisation. Le produit obtenu est soutiré du réacteur et placé dans un récipient fermé jusqu'à retour à température ambiante.

100 g du produit sont ensuite prélevés à l'aide d'une seringue et dispersés goutte à goutte et sous agitation pendant 5 minutes, dans 300 mL d'acétone commercial de pureté ≥ 99%. On observe la formation de particules solides et blanches. Le flacon est bouché et laissé sous agitation à 25°C pendant 16 heures.

Le milieu hétérogène obtenu -constitué d'un solide blanc et de liquide- est filtré sur un entonnoir filtrant en verre fritté n°3 dont les pores sont compris entre 16 et 40µm.

Le solide récupéré est alors transféré dans un cristallisoir préalablement taré, puis placé à l'étuve à 40 °C pendant 24 h. A la sortie de l'étuve, le produit est broyé pendant 5 minutes à l'aide d'un broyeur de type IKA A11. Cette étape de broyage permet d'éviter les agglomérats de produit. En obtenant des particules de fine taille la mesure de l'humidité résiduelle de l'échantillon sera alors plus précise. L'humidité résiduelle de l'échantillon est mesurée à l'aide d'une thermo-balance de type Metler LJ16. Il est ainsi possible de déterminer la masse sèche d'amidon greffé.

La masse d'amidon sec dans le prélèvement de milieu réactionnel étant connue, il est possible par différence de connaître la masse de monomères greffés sur l'amidon (correspondant à la prise de masse de l'amidon prélevé). On exprime le taux de conversion en monomères comme étant égal au % d'accroissement de la masse de l'échantillon, par rapport à la masse de monomères initialement introduite dans la réaction.

L'ensemble des données expérimentales ainsi que les taux de conversion calculés sont repris dans le tableau 1. Il apparaît très clairement que les taux de conversion selon l'invention (essais menés avec les persulfates de sodium et de potassium) sont bien plus élevés qu'avec les 2 autres initiateurs de radicaux libres.

**Tableau 1**

| | Essais H₂O₂/Fe⁺⁺ | | Essais (NH₄)₂Ce(NO₃)₆ / HNO₃ | | Persulfate de potassium | | Persulfate de sodium |
|---|---|---|---|---|---|---|---|
| Masse amidon (g sec) | 323,7 | Amidon en g sec | 323,9 | Amidon en g sec | 323,8 | Amidon en g sec | 323,8 |
| Masse eau (g) | 1356,4 | Eau totale en g | 1421,1 | Eau totale en g | 1417,1 | Eau totale en g | 1416,7 |
| FeSO₄,7H₂O en g com | 0,016 | (NH₄)₂Ce(NO₃)₆ en g sec | 10 | K₂S₂O₃ en g sec | 5 | Na₂S₂O₈ en g sec | 5,0 |
| FeSO₄ en g sec | 0,009 | HNO₃ à 65% en g | 3,5 | | | | |
| H₂O₂ à 30% en g | 2,2 | HNO₃ en g sec | 2,3 | | | | |
| H₂O₂ en g sec | 0,66 | | | | | | |
| initiateur / amidon (% massique) | 0.2% | initiateur / amidon (% massique) | 3.1% | initiateur / amidon (% massique) | 1.5% | initiateur / amidon (% massique) | 1.5% |
| Mole d'initiateur (mmole) | 19.4 | Mole d'initiateur (mmole) | 18.2 | Mole d'initiateur (mmole) | 18.5 | Mole d'initiateur (mmole) | 20,5 |
| Mole initiateur/ mole AGU | 9.7*10⁻³ | Mole initiateur/ mole AGU | 9.1*10⁻³ | Mole initiateur/ mole AGU | 9.2*10⁻³ | Mole initiateur/ mole AGU | 10^{*}10⁻³ |
| Styrène en g | 49 | Styrène en g | 49,1 | Styrène en g | 48,8 | Styrène en g | 48,9 |
| N-Butylacrylate (g) | 16,4 | N-Butylacrylate | 16,3 | N-Butylacrylate (g) | 16,3 | N-Butylacrylate (g) | 16,2 |
| Masse de styrène dans la prise d'échantillon (g) | 3,19 | Masse de styrène dans la prise d'échantillon (g) | 3,01 | Masse de styrène dans la prise d'échantillon (g) | 3,38 | Masse de styrène dans la prise d'échantillon (g) | 3,03 |
| Masse de n-acrylate de butyle dans la prise d'échantillon (g) | 1,07 | Masse de n-acrylate de butyle dans la prise d'échantillon (g) | 1 | Masse de n-acrylate de butyle dans la prise d'échantillon (g) | 1,13 | Masse de n-acrylate de butyle dans la prise d'échantillon (g) | 1,01 |
| Amidon sec dans l'échantillon (g) | 21,04 | Amidon sec dans l'échantillon (g) | 19,83 | Amidon sec dans l'échantillon (g) | 22,46 | Amidon sec dans l'échantillon (g) | 20,1 |
| Produit sec récupéré après précipitation dans l'acétone et séchage (g) | 22,2 | Produit sec récupéré après précipitation dans l'acétone et séchage (g) | 22,9 | Produit sec récupéré après précipitation dans l'acétone et séchage (g) | 26,6 | Produit sec récupéré après précipitation dans l'acétone et séchage (g) | 23,6 |
| Taux de conversion des monomères en % | 27 | Taux de conversion des monomères en % | 77 | Taux de conversion des monomères en % | 92 | Taux de conversion des monomères en % | 86 |

| | | | | | | | |
|---|---|---|---|---|---|---|---|
| AGU : AnhydroGIUcose | | | | | | | |

### Exemple 2

Cet exemple illustre l'influence de la dose d'initiateur utilisée, dans le cas du persulfate de sodium.

On a donc reproduit l'exemple précédent dans le cas où l'initiateur de radicaux libres était le persulfate de sodium (1.5 % en poids sec par rapport au poids sec de dextrine précédemment) à d'autres dosages : 5, 2.5, 0.5 et 0.1 % en poids sec par rapport au poids sec de dextrine.

Le pouvoir hydrophobe des suspensions aqueuses de copolymères (dextrine + styrène/acrylate de butyle) obtenues en faisant varier la quantité de persulfate de sodium est alors évalué après une étape d'enduction directe de ces suspensions à la surface du papier selon des méthodes connues de l'homme du métier.

Pour ce faire, on réalise des feuilles de papier de laboratoire appelées formettes, à partir d'un dispositif FRET (formettes de rétention) commercialisé par la société TECHPAP. Ces formettes ont des caractéristiques proches du papier industriel client, notamment en ce qui concerne la floculation et les rétentions.

Le procédé de fabrication de la formette met en oeuvre une pâte à papier qui est une pâte de fibres vierges (50% résineux, 50% feuillus) avec un niveau de raffinage de 35° Schopper (SR). On ajoute 35% (en poids sec par rapport au poids total de la pâte) de carbonate de calcium naturel commercialisé par la société OMYA® sous le nom d'Omyalite® 50. La suspension fibreuse chargée a une concentration de 2,5g/l. On ajoute ensuite 0,3 % (équivalent sec / papier) d'une colle de HICAT® 5163AM (ROQUETTE®). On ajoute enfin 0,35 % (par rapport au papier) d'une émulsion d'anhydride alkényle succinique (Chemsize® A180 commercialisé par la société CHEMEC®). On réalise ainsi une formette présentant un grammage de 70 g/m².

Après fabrication de la formette, celle-ci est placée entre 2 buvards et l'ensemble est passé 2 fois dans une presse à rouleau de marque TECHPAP. La formette est ensuite séparée des buvards puis est placée sur un séchoir de marque TECHPAP, durant 5 minutes à 100°C. Un mûrissement des formettes est réalisé ensuite, en plaçant celles-ci durant 30 minutes dans une étuve à 110°C, pour favoriser l'action de l'agent de collage.

Les formettes sont ensuite placées au minimum 24 heures dans une pièce conditionnée à 23°C (+/- 1 °C) et 50 % d'humidité relative (+/- 2 %) (normes ISO 187 : 1990 et Tappi T402 sp-08).

La suspension de copolymère à une matière sèche de 22% (mesurée à l'aide d'une thermo-balance Sartorius) est déposée de manière régulière à la surface d'une formette de papier. Pour ce faire, une formette préalablement tarée est placée sur un appareil d'enduction de type K303 MultiCoater. L'appareil est réglé à une vitesse de déplacement de la barre d'enduction de 10mtrs/min de sorte de déposer l'équivalent de 1.5g de copolymère de dextrine hydrophobe sec par m² de papier. Le papier enduit est pesé, puis séché pendant 2 minutes dans une étuve ventilée, réglée à une température de 120°C.

On réalise ensuite une mesure de Cobb 60 (normes ISO 535:1991 et Tappi T441 om-04) sur les papiers directement surfacés par la suspension de copolymère (dextrine + styrène/acrylate de butyle). Ce test est relatif à l'hydrophobicité du papier : plus faible est la quantité d'eau absorbée, plus le papier est hydrophobe. La valeur de Cobb du papier témoin non surfacé est de 112.

L'ensemble des résultats apparaît dans le tableau 2.

**Tableau 2**

| | | | | | |
|---|---|---|---|---|---|
| Persulfate (% sec / sec amidon) | 5 | 2,5 | 1,5 | 0,5 | 0,1 |
| Taux de conversion monomères (%) | 92 | 85 | 86 | 65 | < 2 |
| Cobb 60 | 82 | 76 | 40 | 62 | 98 |

On constate donc que la meilleure hydrophobicité du papier est obtenue pour une dose en persulfate comprise entre 0,5 % et 1,5 % en poids sec, par rapport au poids sec d'amidon.

De plus, le meilleur compromis entre un taux de conversion élevé et une faible valeur de Cobb60 est obtenu lorsqu'on met en oeuvre 1,5 % en poids sec de persulfate de sodium par rapport au poids sec d'amidon.

### Exemple 3

Cet exemple illustre l'influence de la teneur relative en styrène et en acrylate de butyle sur les propriétés d'hydrophobie de la dextrine synthétisée à l'égard de la feuille de papier.

362,3 grammes de dextrine commerciale de type STABILYS® A025, présentant une humidité résiduelle de 10.3 % (325,0 g sec ; 2,0 moles de motifs anhydroglucose) sont mélangés sous agitation avec 1262.7 g d'eau potable. Le lait est introduit dans un réacteur, et maintenu sous agitation à l'aide d'un agitateur mécanique.

Le réacteur utilisé est un réacteur double enveloppe en verre de 2 litres, équipé d'une vanne de fond non thermostatée permettant le soutirage du produit en fin de réaction. Le réacteur est également équipé de piquages permettant l'introduction de sondes (pH, température...) pour le suivi de certains paramètres de réaction. Le réacteur possède également un dispositif d'agitation.

Le lait est chauffé et maintenu à une température de 95°C pendant 30 minutes (formation d'une colle de dextrine). Au bout de 30 minutes le milieu est refroidi jusqu'à la température de réaction sélectionnée (85°C).

Les monomères utilisés sont le styrène et l'acrylate de butyle. Le mélange de monomères est constitué de 65 g de mélange styrène / acrylate de n-butyle (compte tenu de la quantité de dextrine sèche introduite, ici 325 g, l'amidon représente donc ici plus de 80 % en poids du mélange amidon / styrène / acrylate de n-butyle). La proportion de styrène et d'acrylate de n-butyle peut varier selon les essais.

Ce mélange est introduit dans le milieu à 85 °C sous agitation, à l'aide d'une pompe péristaltique à débit constant pendant 1 h. Dans le même temps, l'initiateur, ici le persulfate de potassium (K₂S₂O₈) (4.875g ; 1.5 % en poids / amidon sec) est introduit dans le milieu sous forme d'une solution aqueuse (solution à 3.9 % en poids dans l'eau potable) à débit constant à l'aide d'une pompe péristaltique. Les deux ajouts se font séparément mais simultanément. On note un blanchissement et une augmentation de la viscosité du milieu au fur et à mesure de l'introduction des réactifs.

Lorsque l'introduction des réactifs est terminée, le milieu est laissé sous agitation à 85 °C pendant 30 minutes supplémentaires. En fin de réaction, le milieu réactionnel est récupéré pour utilisation dans l'application visée.

On réalise ainsi différents essais, dans lesquels on fait varier les proportions en poids de styrène et d'acrylate de butyle. Les données correspondantes figurent dans le tableau 3. Ces essais numérotés de 2 à 10 correspondent donc à des copolymères dont la teneur en dextrine est égale à 80 % en poids du poids total de dextrine et de monomère hydrophobe (tableau 4). De manière identique, on réalise également les essais 11 à 19, où cette teneur est égale à 90 %. On réalise aussi de manière identique les essais n° 20 à 28 où cette teneur est égale à 70 % (tableau 5). L'essai n° 1 correspond à la dextrine seule.

On fabrique ensuite des sauces de couchage, par mélange entre :
- 100 parts en poids d'Hydrocarb 60 (carbonate de calcium) commercialisé par OMYA
- 3 parts en poids de Litex PX 9450 (liant styrène-butadiène) commercialisé par BASF
- 0,2 part en poids de Rheocoat 66 (agent rhéologique) commercialisé par COATEX
- et 7 parts en poids du copolymère synthétisé avec 5, 2.5, 0.5 et 0.1 % en poids sec de persulfate de sodium par rapport au poids sec de dextrine

La teneur en matière sèche de chaque sauce est ajustée à 66 % en poids de son poids total.

On teste ensuite la capacité des sauces de couchage à rendre plus hydrophobe la surface d'un papier sur lequel elles sont appliquées.

Pour ce faire, on réalise des feuilles de papier de laboratoire appelées formettes, à partir d'un dispositif FRET (formettes de rétention) commercialisé par la société TECHPAP. Ces formettes ont des caractéristiques proches du papier industriel client, notamment en ce qui concerne la floculation et les rétentions.

Le procédé de fabrication de la formette met en oeuvre une pâte à papier qui est une pâte de fibres vierges (50% résineux, 50% feuillus) avec un niveau de raffinage de 35° Schopper (SR). On ajoute 35% (en poids sec par rapport au poids total de la pâte) de carbonate de calcium naturel commercialisé par la société OMYA® sous le nom d'Omyalite® 50. La suspension fibreuse chargée a une concentration de 2,5g/l. On ajoute ensuite 0,3 % (équivalent sec / papier) d'une colle de HICAT® 5163AM (ROQUETTE®). On ajoute enfin 0,35 % (par rapport au papier) d'une 'émulsion d'anhydride alkényle succinique (Chemsize® A180 commercialisé par la société CHEMEC®). On réalise ainsi une formette présentant un grammage de 70 g/m².

Les sauces de couchage sont alors appliquées sur le papier à l'aide d'un HeliCoater Dixon réglé à une vitesse de 1000 tours / min et une pression de lame de 3 mm de sorte d'obtenir des déposes de l'ordre de 13g de sauce de couchage sec par m² de papier. L'étape de séchage est assurée par des lampes infra-rouge présentes sur la face arrière de l'Helicoater. On mesure enfin la valeur de Cobb 60 comme indiqué dans l'exemple précédent.

Pour l'ensemble des essais n° 1 à 28, les résultats sont donc reportés dans les tableaux 3 à 5 (dans ces 3 tableaux, les % en monomère hydrophobe sont donnés en % en poids par rapport au poids total des 2 monomères.

**Tableau 3**

| Essai n° | 1 | 2 | 3 | 4 | 5 | 6 | 7 | 8 | 9 | 10 |
|---|---|---|---|---|---|---|---|---|---|---|
| % styrène | 0 | 100 | 90 | 75 | 60 | 50 | 40 | 25 | 10 | 0 |
| % acrylate de butyle | 0 | 0 | 10 | 25 | 40 | 50 | 60 | 75 | 90 | 100 |
| Cobb 60 | 108 | 82 | 75 | 64 | 62 | 60 | 63 | 68 | 83 | 82 |

**Tableau 4**

| Essai n° | 1 | 11 | 12 | 13 | 14 | 15 | 16 | 17 | 18 | 19 |
|---|---|---|---|---|---|---|---|---|---|---|
| % styrène | 0 | 100 | 90 | 75 | 60 | 50 | 40 | 25 | 10 | 0 |
| % acrylate de butyle | 0 | 0 | 10 | 25 | 40 | 50 | 60 | 75 | 90 | 100 |
| Cobb 60 | 108 | 95 | 83 | 77 | 69 | 67 | 72 | 88 | 99 | 102 |

**Tableau 5**

| Essai n° | 1 | 20 | 21 | 22 | 23 | 24 | 25 | 26 | 27 | 28 |
|---|---|---|---|---|---|---|---|---|---|---|
| % styrène | 0 | 100 | 90 | 75 | 60 | 50 | 40 | 25 | 10 | 0 |
| % acrylate de butyle | 0 | 0 | 10 | 25 | 40 | 50 | 60 | 75 | 90 | 100 |
| Cobb 60 | 108 | 73 | 66 | 60 | 59 | 55 | 61 | 64 | 77 | 79 |

On constate que les valeurs de Cobb les plus faibles sont bien obtenues pour les teneurs en monomères caractéristiques de la présente invention.

## Revendications

1. Procédé de polymérisation radicalaire entre une dextrine et au moins deux monomères hydrophobes,
- ladite dextrine représentant au moins 60 % en poids du poids total de dextrine et de monomères hydrophobes et ayant une masse moléculaire moyenne en poids allant de 60 000 Da à 2 000 000 Da,
- les monomères hydrophobes étant constitués par le styrène et par au moins un ester acrylique linéaire ou ramifié de C1 à C4, le ratio en poids styrène : ester étant compris entre 10:90 et 90:10,
ce procédé étant **caractérisé en ce que** la polymérisation a lieu en présence d'un initiateur de radicaux libres qui est un persulfate, dans un dosage compris entre 0,5 % et 2,5 % en poids sec par rapport au poids sec de dextrine.

2. Procédé selon la revendication 1, **caractérisé en ce que** le persulfate est le persulfate de sodium ou de potassium.

3. Procédé selon l'une des revendications 1 ou 2, **caractérisé en ce que** la dextrine représente au moins 70 %, et de manière préférée au moins 80 % en poids du poids total de dextrine, de styrène et d'ester.

4. Procédé selon l'une des revendications 1 à 3, **caractérisé en ce que** la dextrine présente une masse moléculaire moyenne en poids allant de 500 000 Da à 1 500 000 Da, et de manière préférée présente une fraction massique supérieure à 5 % de molécules de masse moléculaire moyenne en poids supérieure à 1 000 000 Da, de préférence une fraction comprise entre 5 et 25 %.

5. Procédé selon l'une des revendications 1 à 3, **caractérisé en ce que** la dextrine présente une masse moléculaire moyenne en poids allant de 60 000 Da à 500 000Da.

6. Procédé selon l'une des revendications 1 à 5, **caractérisé en ce que** le ratio en poids styrène : ester est compris entre 80:20 et 20:80.

7. Procédé selon l'une des revendications 1 à 6, **caractérisé en ce que** l'ester est un (méth)acrylate de butyle, préférentiellement l'acrylate de butyle.

8. Copolymère d'une dextrine et d'au moins deux monomères hydrophobes :
- ladite dextrine représentant au moins 60 % en poids du poids total de dextrine et de monomères hydrophobes et ayant une masse moléculaire moyenne en poids allant de 60 000 Da à 2 000 000 Da,
- les monomères hydrophobe étant constitués par le styrène et au moins un ester acrylique linéaire ou ramifié de C1 à C4, le ratio en poids styrène : ester étant compris entre 10:90 et 90:10.

9. Copolymère selon la revendication 8, **caractérisé en ce que** la dextrine représente au moins 70 %, et de manière préférée au moins 80 % en poids du poids total de dextrine, de styrène et d'ester.

10. Copolymère selon l'une des revendications 8 ou 9, **caractérisé en ce que** la dextrine présente une masse moléculaire moyenne en poids allant de 500 000 Da à 1 500 000 Da, et de manière préférée présente une fraction massique supérieure à 5% de molécules de masse moléculaire supérieure à 1 000 000 Da, de préférence une fraction massique comprise entre 5 et 25%.

11. Copolymère selon l'une des revendications 8 ou 9, **caractérisé en ce que** la dextrine présente une masse moléculaire moyenne en poids allant de 60 000 Da à 500 000 Da.

12. Copolymère selon l'une des revendications 8 à 11, **caractérisé en ce que** le ratio en poids styrène : ester est compris entre 80:20 et 20:80.

13. Copolymère selon l'une des revendications 8 à 12, **caractérisé en ce que** l'ester est un (méth)acrylate de butyle, préférentiellement l'acrylate de butyle.

14. Suspension aqueuse contenant le copolymère selon l'une des revendications 8 à 13.

15. Suspension aqueuse selon la revendication 14, **caractérisée en ce qu'**elle présente une teneur en matière sèche ou teneur en poids sec dudit copolymère supérieure à 10 % de son poids total, et notamment comprise entre 10 % et 50 % de son poids total.

16. Sauce de couchage contenant la suspension aqueuse selon l'une des revendications 14 ou 15 ou le copolymère selon l'une des revendications 8 à 13.

17. Papier couché sur au moins une de ses faces avec la sauce de couchage selon la revendication 16.

## Patentansprüche

1. Verfahren für die radikalische Polymerisation zwischen einem Dextrin und wenigstens zwei hydrophoben Monomeren,
- wobei das Dextrin wenigstens 60 Gewichtsprozent des Gesamtgewichts von Dextrin und hydrophoben Monomeren ausmacht und ein mittleres Molekulargewicht von 60 000 Da bis 2 000 000 Da aufweist,
- wobei die hydrophoben Monomere Styrol und wenigstens einen linearen oder an C1 bis C4 verzweigten Acrylester umfassen, wobei das Verhältnis Styrol:Ester zwischen 10:90 und 90:10 liegt,
wobei das Verfahren **dadurch gekennzeichnet ist, dass** die Polymerisation in Anwesenheit eines Freiradikal-Initiators stattfindet, welcher ein Persulfat ist, in einer Dosierung von 0,5 bis 2,5 % Trockengewicht im Verhältnis zu dem Dextrin-Trockengewicht.

2. Verfahren nach Anspruch 1, **dadurch gekennzeichnet, dass** das Persulfat Natriumpersulfat oder Kaliumpersulfat ist.

3. Verfahren nach einem der Ansprüche 1 oder 2, **dadurch gekennzeichnet, dass** das Dextrin wenigstens 70 Gewichtsprozent, vorzugsweise wenigstens 80 Gewichtsprozent des Gesamtgewichts von Dextrin, Styrol und Ester ausmacht.

4. Verfahren nach einem der Ansprüche 1 bis 3, **dadurch gekennzeichnet, dass** das Dextrin ein Gewichtsmittel-Molekulargewicht von 500 000 Da bis 1 500 000 Da aufweist, und vorzugsweise einen Massenanteil größer 5 % an Molekülen mit einem Gewichtsmittel-Molekulargewicht größer 1 000 000 Da aufweist, bevorzugt einen Anteil von 5 bis 25 %.

5. Verfahren nach einem der Ansprüche 1 bis 3, **dadurch gekennzeichnet, dass** das Dextrin ein Gewichtsmittel-Molekulargewicht von 60 000 Da bis 500 000 Da aufweist.

6. Verfahren nach einem der Ansprüche 1 bis 5, **dadurch gekennzeichnet, dass** das Gewichtsverhältnis Styrol:Ester zwischen 80:20 und 20:80 liegt.

7. Verfahren nach einem der Ansprüche 1 bis 6, **dadurch gekennzeichnet, dass** der Ester ein Butylmethacrylat ist, vorzugsweise Butylacrylat.

8. Dextrincopolymer und wenigstens zwei hydrophobe Monomere:
- wobei das Dextrin wenigstens 60 Gewichtsprozent des Gesamtgewichts von Dextrin und hydrophoben Monomeren ausmacht und ein Gewichtsmittel-Molekulargewicht von 60 000 Da bis 2 000 000 Da aufweist,
- wobei die hydrophoben Monomere von Styrol und wenigstens einem linearen oder an C1 bis C4 verzweigten Acrylester gebildet werden, wobei das Verhältnis Styrol:Ester zwischen 10:90 und 90:10 liegt.

9. Copolymer nach Anspruch 8, **dadurch gekennzeichnet, dass** das Dextrin wenigstens 70 Gewichtsprozent und vorzugsweise wenigstens 80 Gewichtsprozent des Gesamtgewichts von Dextrin, Styrol und Ester ausmacht.

10. Copolymer nach Anspruch 8 oder 9, **dadurch gekennzeichnet, dass** das Dextrin ein Gewichtsmittel-Molekulargewicht von 500 000 Da bis 1 500 000 Da aufweist und vorzugsweise einen Massenanteil größer 5 % an Molekülen mit einem Gewichtsmittel-Molekulargewicht größer 1 000 000 Da aufweist, bevorzugt einen Anteil von 5 bis 25 %.

11. Copolymer nach Anspruch 8 oder 9, **dadurch gekennzeichnet, dass** das Dextrin ein Gewichtsmittel-Molekulargewicht von 60 000 Da bis 500 000 Da aufweist.

12. Copolymer nach einem der Ansprüche 8 bis 11, **dadurch gekennzeichnet, dass** das Verhältnis Styrol:Ester zwischen 80:20 und 20:80 liegt.

13. Copolymer nach einem der Ansprüche 8 bis 12, **dadurch gekennzeichnet, dass** der Ester ein Butylmethacrylat ist, vorzugsweise Butylacrylat.

14. Wässrige Suspension, welche ein Copolymer nach einem der Ansprüche 8 bis 13 umfasst.

15. Wässrige Suspension nach Anspruch 14, **dadurch gekennzeichnet, dass** sie einen Trockensubstanzgehalt oder ein Trockengewicht des Copolymers größer 10 % des Gesamtgewichts aufweist, insbesondere zwischen 10 und 50 % des Gesamtgewichts.

16. Beschichtungsmischung, welche die wässrige Suspension nach einem der Ansprüche 14 oder 15 oder das Copolymer nach einem der Ansprüche 8 bis 13 umfasst.

17. Papier, welches auf wenigstens einer seiner Seiten mit der Beschichtungsmischung nach Anspruch 16 bestrichen ist.

## Claims

1. A free-radical polymerization process between a dextrin and at least two hydrophobic monomers,
- said dextrin representing at least 60% by weight of the total weight of dextrin and hydrophobic monomers and having a weight-average molecular mass that ranges from 60 000 Da to 2 000 000 Da,
- the hydrophobic monomers being constituted by styrene and by at least one linear or branched C1 to C4 acrylic ester, the styrene:ester weight ratio being between 10:90 and 90:10,
this process being **characterized in that** the polymerization takes place in the presence of a free-radical initiator which is a persulfate, in a dosage of between 0.5% and 2.5% by dry weight relative to the dry weight of dextrin.

2. The process as claimed in claim 1, **characterized in that** the persulfate is sodium persulfate or potassium persulfate.

3. The process as claimed in either of claims 1 and 2, **characterized in that** the dextrin represents at least 70%, and preferably at least 80% by weight of the total weight of dextrin, styrene and ester.

4. The process as claimed in one of claims 1 to 3, **characterized in that** the dextrin has a weight-average molecular mass that ranges from 500 000 Da to 1 500 000 Da, and preferably has a mass fraction greater than 5% of molecules having a weight-average molecular mass greater than 1000 000 Da, preferably a fraction between 5% and 25%.

5. The process as claimed in one of claims 1 to 3, **characterized in that** the dextrin has a weight-average molecular mass that ranges from 60 000 Da to 500 000 Da.

6. The process as claimed in one of claims 1 to 5, **characterized in that** the styrene:ester weight ratio is between 80:20 and 20:80.

7. The process as claimed in one of claims 1 to 6, **characterized in that** the ester is a butyl (meth)acrylate, preferably butyl acrylate.

8. A copolymer of a dextrin and at least two hydrophobic monomers:
- said dextrin representing at least 60% by weight of the total weight of dextrin and hydrophobic monomers and having a weight-average molecular mass that ranges from 60 000 Da to 2 000 000 Da,
- the hydrophobic monomers being constituted by styrene and by at least one linear or branched C1 to C4 acrylic ester, the styrene:ester weight ratio being between 10:90 and 90:10.

9. The copolymer as claimed in claim 8, **characterized in that** the dextrin represents at least 70%, and preferably at least 80% by weight of the total weight of dextrin, styrene and ester.

10. The copolymer as claimed in either of claims 8 and 9, **characterized in that** the dextrin has a weight-average molecular mass that ranges from 500 000 Da to 1 500 000 Da, and preferably has a mass fraction greater than 5% of molecules having a molecular mass greater than 1 000 000 Da, preferably a mass fraction between 5% and 25%.

11. The copolymer as claimed in either of claims 8 and 9, **characterized in that** the dextrin has a weight-average molecular mass that ranges from 60 000 Da to 500 000 Da.

12. The copolymer as claimed in one of claims 8 to 11, **characterized in that** the styrene:ester weight ratio is between 80:20 and 20:80.

13. The copolymer as claimed in one of claims 8 to 12, **characterized in that** the ester is a butyl (meth)acrylate, preferably butyl acrylate.

14. An aqueous suspension containing the copolymer as claimed in one of claims 8 to 13.

15. The aqueous suspension as claimed in claim 14, **characterized in that** it has a dry matter content or dry weight content of said copolymer greater than 10% of its total weight, and in particular between 10% and 50% of its total weight.

16. A coating color containing the aqueous suspension as claimed in either of claims 14 and 15 or the copolymer as claimed in one of claims 8 to 13.

17. A paper coated on at least one of its faces with the coating color as claimed in claim 16.
